# EUROPÄISCHE PATENTSCHRIFT

(11) **EP 3 568 713 B1**
(45) Veröffentlichungstag und Bekanntmachung des Hinweises auf die Patenterteilung: **23.04.2025**
(21) Anmeldenummer: 17816758.1
(22) Anmeldetag: 13.12.2017
(51) Int. Cl.: G01S 13/931, G01S 13/93, G01S 7/02, G01S 13/32, G01S 13/34

(54) **RADARSENSOR MIT ZWEIDIMENSIONALER STRAHLSCHWENKUNG UND L-, U- ODER T-FÖRMIGER STRUKTUR FÜR DEN VERBAU IM BEREICH DES FRONT-KÜHLERS BEIM AUTOMOBIL**
RADAR SENSOR HAVING A TWO-DIMENSIONAL BEAM SCAN AND L-, U- OR T-SHAPED STRUCTURE FOR MOUNTING IN THE REGION OF THE FRONT RADIATOR OF AN AUTOMOBILE
CAPTEUR RADAR AVEC BALAYAGE DE FAISCEAU BIDIMENSIONNEL ET UNE STRUCTURE EN FORME DE L, U OU T POUR LE MONTAGE DANS UNE ZONE DU RADIATEUR AVANT D'UNE AUTOMOBILE

(30) Priorität: 11.01.2017 DE 102017200383
(43) Veröffentlichungstag der Anmeldung: 20.11.2019
(73) Patentinhaber: ASTYX GmbH, 85521 Ottobrunn (DE)
(72) Erfinder: KÖRBER, Richard, 91352 Hallerndorf (DE); TRUMMER, Günther, 85521 Ottobrunn (DE)
(74) Vertreter: Berkenbrink, Kai-Oliver
(86) Internationale Anmeldenummer: PCT/EP2017/082619
(87) Internationale Veröffentlichungsnummer: WO 2018/130364

(56) Entgegenhaltungen:
- EP-A2- 2 045 612
- WO-A1-2013/045232
- DE-T5- 112014 004 880
- US-A1- 2016 282 450

## Beschreibung

### Technisches Anwendungsgebiet

Die Erfindung betrifft eine Vorrichtung und ein Verfahren zur Vermessung der vertikalen und horizontalen Position von Objekten mit einem Radarsensor, welcher mit einem zweidimensionalen virtuellen Array eine digitale Stahlformung durchführt. Der Radarsensor weist dabei eine L-, U- oder inverse T-förmige Struktur auf, welche es erlaubt, dass der Sensor im Frontbereich des Automobils verbaut werden kann, ohne dass der für den Frontkühler benötigte Luftstrom wesentlich beeinträchtigt wird.

Millimeterwellen-Radarsensoren für automobile Anwendungen, wie beispielsweise den adaptiven Tempomat sind in Fahrtrichtung im Frontbereich des Automobils verbaut. Idealerweise sollte der Sensor möglichst hoch verbaut werden, um den Einfluss des Straßenbelags auf die Ausbreitung der elektromagnetischen Welle zu minimieren. Diese Einflüsse sind Mehrwege-Ausbreitungen und Reflexionen von der Straße, welche die Objekterkennung behindern. Mehrwege-Ausbreitungen führen wegen der Überlagerung der Signale aus unterschiedlichen Richtungen zu Amplitudenschwankungen bis hin zur kurzzeitigen Auslöschung der Empfangssignale. Reflexionen von der Straßenoberfläche sog. Clutter überlagern sich mit dem gewünschten Objektsignal und reduzieren damit den Signalzu Störabstand.

Eine erhöhte Montageposition in Verbindung mit einer zusätzlichen vertikalen Strahlschwenkung reduziert diese Einflüsse erheblich.

Je nach Design der Karosserie, kann diese erhöhte Position jedoch nicht realisiert werden, da der für den Frontkühler benötigte Luftstrom durch eine Verbauung mit dem Radar-Sensor in nicht akzeptabler Weise beeinträchtigt wird.

Dieser Konflikt der Anforderungen wird durch die folgende Erfindung vorteilhaft gelöst. Das Gehäuse und die Antennenanordnung des Radarsensors sind so geformt, das sie sich in die Struktur des Kühlergrills integrieren lassen. Die Antennenapertur des Radarsensors existiert dabei nur virtuell, sodass im Bereich der Antennenapertur der für die Kühlung benötigte Luftstrom ungehindert passieren kann. Das virtuelle Antennenarray erzeugt durch die numerische Verknüpfung von mehreren Sende- und Empfangseinheiten einen hochbündelnden Antennenstrahl, wie er von einem flächigem Array erzeugt würde, ohne jedoch wie dieses den Luftstrom zu beeinträchtigen.

Eine weitere Anforderung ist die Erkennung eines Stauendes auf der Fahrbahn. Hierbei sind stehende Fahrzeuge von Brücken und Gulli-Deckeln zu unterscheiden. Ferner ist eine dreidimensionale Vermessung der Objekte zur Objektklassifikation erwünscht. Diese Aufgabe wird vorteilhaft durch eine zweidimensionale Strahlschwenkung gelöst.

### Stand der Technik

In der DE 10 2008 052 246 A1 wird ein Sensorsystem mit verstellbarer Elevationsstrahlrichtung zur vertikalen Lagebestimmung von Objekten beschrieben. Die Verstellung erfolgt hierbei durch die mechanische Bewegung eines Reflektors.

In der Offenlegungsschrift DE 10 2008 061 932 A1 wird ein Verfahren zur digitalen Strahlformung beschrieben. WO 2013/045232 A1 beschreibt eine Radar-Vorrichtung bei der ein zweidimensional abbildendes Radar durch Bereitstellen mehrerer Sender und mehrerer Empfänger ermöglicht wird. US 2016/282450 A1 beschreibt ein Radargerät, das eine maximal vergrößerte Aperturlänge eines virtuellen Empfangsarrays erreichen kann. EP 2 045 612 A2 beschreibt eine Erfassungs- und Entfernungsmessvorrichtung, die mehrere Sensesensoren verwendet, um die effektive Apertur eines Sensorarrays mit mehreren Sensorelementen zu vergrößern.

### Darstellung der Erfindung

Aufgabe der Erfindung ist es, eine Vorrichtung und ein Verfahren zur Verfügung zu stellen, womit der oben beschriebene Verbau im Fahrzeug realisiert werden kann.

Zusätzlich ist es Aufgabe der Erfindung eine Vorrichtung und ein Verfahren zur Verfügung zu stellen, mit dem die horizontale und vertikale Lage eines Objekts durch eine zweidimensionale Strahlformung bestimmt werden kann.

Die Aufgabe wird vorrichtungsgemäß mit den Merkmalen des Anspruchs 1, verfahrensgemäß mit den Merkmalen des Anspruchs 5 gelöst.

Dementsprechend umfasst die Vorrichtung eine L-, U- oder T-förmige Struktur, sodass der Luftstrom des Frontkühlers nicht oder nur gering beeinflusst wird.

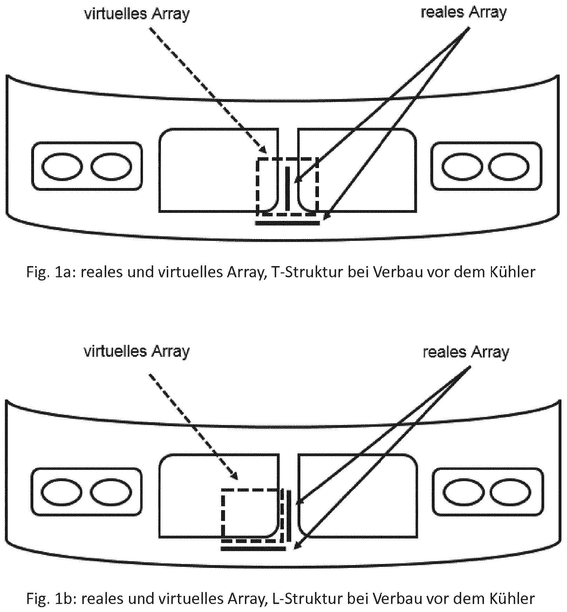

Ferner umfasst die Vorrichtung zur Bestimmung einer Position eines Objekts im dreidimensionalen Raum, insbesondere eines sich bewegenden Objekts, mindestens eine Anzahl mehrerer in Reihe angeordneter Empfangsantennen, sowie einer in Reihe angeordneten Sendeantennen, wobei die Sendeantennenreihe orthogonal zur Empfangsreihe angeordnet ist. Die beiden Antennenreihen haben bevorzugt eine T-, U- oder L-förmige Struktur (Fig. 1a, 1b). Die Antennen werden dabei bevorzugt als Einzel-Patch-Antennen mit breiter Strahlkeule in der horizontalen und vertikalen Richtung ausgeführt. Die Strahlbündelung und -steuerung erfolgt ausschließlich über die digitale Strahlformung durch Kombination der Einzelstrahler. Gegenüber einem hochbündelnden Einzelstrahler hat dies den Vorteil, dass beim digital geformten Strahl die Struktur eines Kühlergrills die Antennenrichtcharakteristik nur gering beeinflusst.

Ferner umfasst die Vorrichtung einen Frequenzgenerator zur Erzeugung eines Signals, welches individuell für jede Sende-Antenne phasencodiert wird. Zur Formung eines virtuellen zweidimensionalen Arrays sind jeweils eine Sendeantenne und eine Empfangsantenne zu kombinieren. Das Signal der Empfangsantennen wird zunächst mit dem gemeinsamen uncodierten Sendesignal in eine Zwischenfrequenzebene oder in das Basisband umgesetzt. Anschließend erfolgt eine analoge Signalaufbereitung (Filterung, Verstärkung) und eine Digitalisierung der Signale. Das Signal wird dann mit dem Code des gewünschten Sende-Partners decodiert und das virtuelle zweidimensionale Array erzeugt.

Ferner sind die Sender zeitgleich zu betreiben, damit das Verfahren der digitalen Strahlformung auch bei hochdynamischen Szenarien, wie dem Straßenverkehr einsetzbar ist.

### Ausführungsbeispiele:

Nachfolgend werden Ausführungsbeispiele der Erfindung anhand einer Zeichnung näher erläutert. Einander entsprechende Teile sind in allen Figuren mit den gleichen Bezugszeichen versehen.

### Beispiel 1: FMCW-Radar mit Phasencodierung von Frequenzrampe zu Frequenzrampe

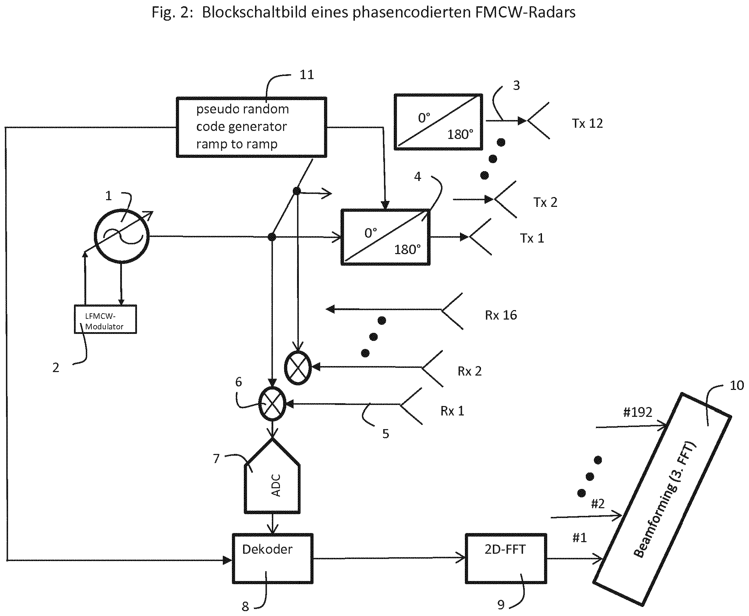

Die Erfindung betrifft ein frequenzmoduliertes Dauerstrich Radar (FMCW-Radar) nach Fig. 2, welches ein Gebiet mit Hilfe der digitalen Strahlformung überwacht. Der Radarsensor besteht dabei aus einem Sender mit mehreren z.B. 12 Ausgängen (Tx) und mehreren z.B. 16 Empfängern (Rx). Der Sender besteht aus einem spannungsgesteuerten Oszillator (1) mit integriertem Frequenzmodulator (2) und 12 parallelen Ausgängen (3). Die Ausgänge sind dabei mit Endverstärkern (4) bestückt, welche durch Anlegen eines Steuersignals (11) die Phase des Sendesignals um 180° verändern können.

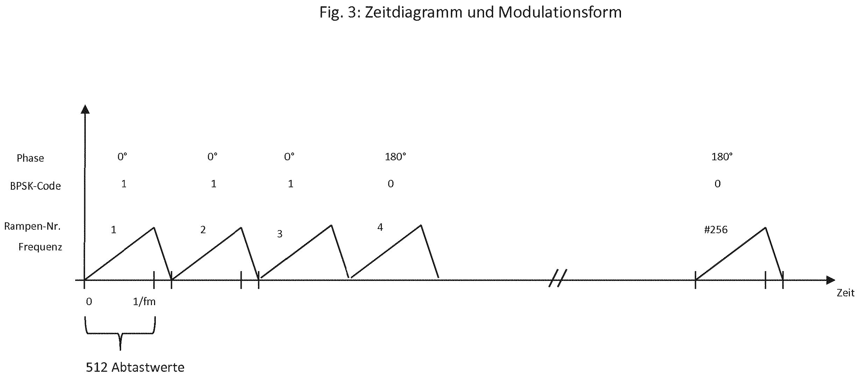

Fig. 3 zeigt den sägezahnförmigen zeitlichen Verlauf der Sendefrequenz. Während einer Frequenzrampe wird das Empfangssignal beispielsweise mit 512 Punkten abgetastet. Es werden ca. 256 Rampen während eines Messzyklus aufgezeichnet.

Das Sendesignal während der einzelnen Frequenzrampen wird mit Hilfe eines sog. Pseudo-Random-Code-Generators in der Phase binär codiert. O bedeutet die Phase wird um 180° gedreht, 1 bedeutet die Phase bleibt gleich.

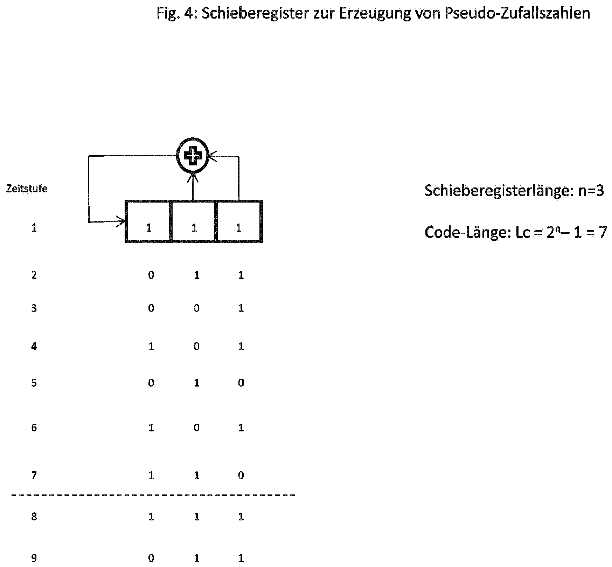

Der Pseudo-Random-Code wird bevorzugt durch ein Schieberegister erzeugt. Fig. 4 zeigt ein 3-stufiges Schieberegister. Je nach Anfangscodierung stellt sich ein unterschiedlicher Code ein. Die Codelänge berechnet sich zu
N = 2ⁿ - 1, mit n = Anzahl der Registerstufen. Bei dem hier dargestellten Register mit 3 Stufen, wiederholt sich der Code also nach 7 Zeit-Stufen. In der Praxis werden jedoch längere Codes bevorzugt, da hier die Entkopplung zwischen den einzelnen Sendesignalen besser ist.

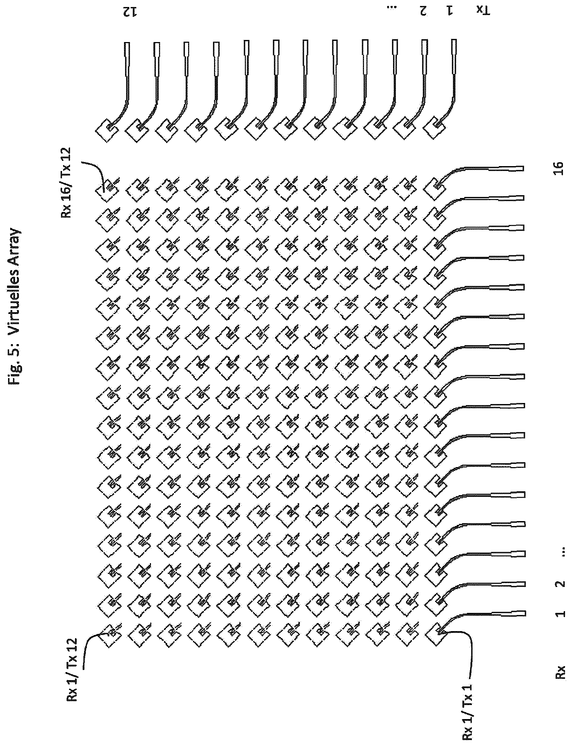

Im Empfänger des Radarsensors nach Fig. 2 wird das vom Objekt reflektierte und von der Antenne (5) empfangene Signal zunächst mit einem Mischer (6) in das Basisband umgesetzt und von einem AD-Wandler (7) abgetastet. Das abgetastete Signal wird dann mit den Codes der jeweiligen Sender dekodiert (8). So entstehen bei 16 Empfängern und 12 Transmittern 12*16= 192 Empfangssignale. Diese Signale können dem in Fig. 5 dargestellten Elementen des virtuellen Arrays zugeordnet werden.

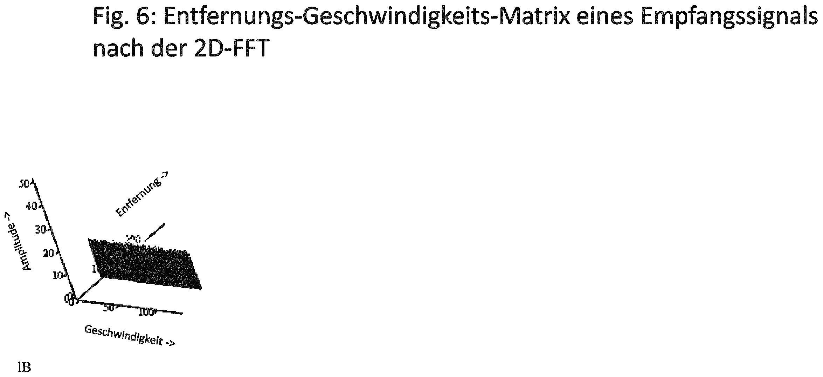

Nach der Dekodierung erfolgt eine wie beispielsweise in der DE 10 2008 061 932 A1 beschriebene Signalverarbeitung. Diese besteht zunächst aus einer zweidimensionalen FFT, welche eine sog. Entfernungs-Geschwindigkeits-Matrix je Empfangssignal erzeugt. Fig. 6 zeigt beispielhaft eine solche Matrix mit einem Echosignal bei Entfernungszelle 100 und Geschwindigkeitszelle 0. Durch die endliche Entkopplung zwischen den einzelnen Sendecodes, entstehen Nebenlinien in Geschwindigkeitsrichtung, welche bei der hier gewählten Codelänge N = 255 circa 20 dB unterhalb des Nutzsignals liegen. Der Dynamik-Bereich in Geschwindigkeitsrichtung ist also eingeschränkt. Der Dynamik-Bereich in Entfernungsrichtung ist davon nicht betroffen. Dies bedeutet, dass beispielsweise Objekte bei gleicher Entfernung aber mit unterschiedlicher Geschwindigkeit sich in der Echo-Amplitude um weniger als 20 dB unterscheiden müssen, um noch separat erkannt zu werden.

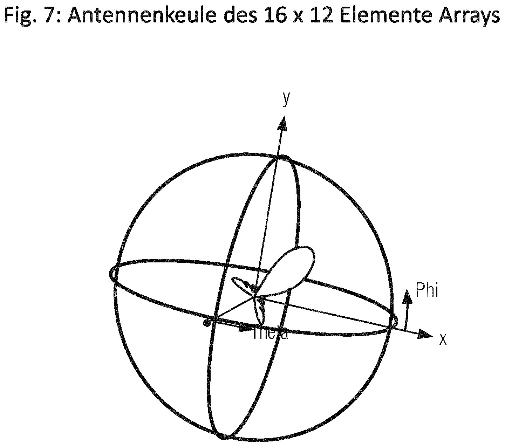

Nach der zweidimensionalen FFT (9) werden die Antennenkeulen (10) geformt. Dies geschieht durch eine Gewichtung, Phasenverschiebung je nach gewünschter Blickrichtung und Aufsummierung der einzelnen Kanäle, wie es z.B. in der DE 10 2008 061 932 A1 beschrieben ist. Alternativ kann eine dritte FFT über die Empfangssignale gerechnet werden, welche dann eine Vielzahl von Antennenkeulen im dreidimensionalen Raum erzeugt, von denen dann eine Untermenge für die Detektion im gewählten Blickfeld herangezogen wird. Fig. 7 zeigt die Antennenkeule eines 16x12 Antennenarrays. Sie hat eine Strahlbreite von 8° horizontal und 11° vertikal und einen Schwenkbereich von +- 60° in der vertikalen sowie von +- 65° in der horizontalen Ebene.

### Beispiel 2: CW-Radar mit Phasencodierung synchron zur Abtastfrequenz

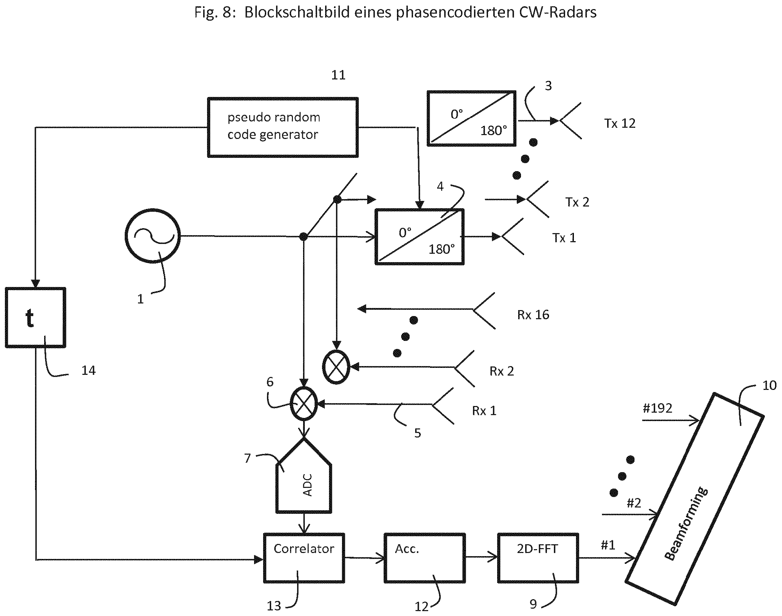

Ein weiteres Ausführungsbeispiel ist eine binäre Phasencodierung eines monofrequenten Dauerstrich-Signals (sog. CW-Signal). Fig. 8 zeigt das Blockschaltbild dieses Radarsystems. Ein Oszillator (1) wird mit einem monofrequenten Trägersignal betrieben. Dieses Signal wird zunächst auf alle 12 Sendekanäle (3) aufgeteilt und je Kanal in der Phase binär durch einen "pseudo-random" Codegenerator (4) moduliert. Die von den Empfangsantennen (5) erfassten Objekt-Echos werden mit einem Mischer (6) in das Basisband umgesetzt und mit einem AD-Wandler (7) digitalisiert. Anschließend erfolgt eine Kreuzkorrelation (13) des digitalisierten Signals mit dem jeweiligen zeitverzögerten Code des Senders (14), sodass 12 Signalpfade je Empfangskanal generiert werden. Zur Verbesserung des Signal-Rauschabstandes werden dann mehrere Code-Sequenzen akkumuliert (12) und dann einer - zum Beispiel 1 äquivalenten - Signalverarbeitung, bestehend aus 2D-FFT (9) und Beamforming (10) zugeführt.

Im Gegensatz zu der relativ langsamen Phasencodierung nach Beispiel 1, wird hier die Phase eines monofrequenten Signals mit jedem Abtastwert geändert. Für die sog. Chip-Länge Tc gilt: Tc = 2*ΔR/c mit
ΔR: Entfernungsauflösung
c: Lichtgeschwindigkeit

Will man also eine Auflösung von 10 cm erreichen, so ist eine Chip-Länge von 0.67 nsec und eine Abtastfrequenz von 1.5 Gigasamples/sec. nötig. Bei einer Codelänge von 2¹³ -1 = 8192 ist die Dauer des Codes Lc = 5.46 µs. Die Code-Dauer bestimmt die maximal eindeutige Reichweite. Es gilt Lc = 2*Rmax/c.

Die maximale Reichweite beträgt also in diesem Beispiel 800 m, was für die Anwendung im Automobilbereich ausreichend ist.

## Patentansprüche

1. Vorrichtung zur Bestimmung der Position eines Objekts im dreidimensionalen Raum mittels einer Antennenstruktur (5), wobei die Antennenstruktur eine L-, U- oder T-förmige Struktur aufweist und im Bereich des Front-Kühlers mit Kühlergrill eines Fahrzeugs montierbar ist, wobei die Antennenstruktur ein Radarsensor ist und ein Gehäuse und eine Antennenordnung des Radarsensors derart geformt sind, dass sie in die Struktur des Kühlergrills integrierbar sind, wobei die Antennenstruktur hinter dem luftundurchlässigen Bereich des Kühlergrills vorgesehen ist und wobei eine kombinierte Frequenz-Phasenmodulation der Sendesignale und gleichzeitiger Betrieb aller Sender ermöglicht wird.

2. Vorrichtung nach Anspruch 1, wobei die Antennenstruktur (5) mehrere Radar-Sende-/Empfangs-Einrichtungen aufweist, wobei jede Einrichtung eine Vielzahl von Empfängern und eine Vielzahl von Sendern aufweist, und ein virtuelles Antennenarray für zweidimensionale horizontale und vertikale Strahlschwenkung bildet, wobei das virtuelle Antennenarray im Bereich der Lüftungsöffnungen des Kühlergrills zum Liegen kommt.

3. Vorrichtung nach einem der Ansprüche 1 bis 2, wobei eine Auswerteeinheit vorgesehen ist, welche mit festgelegten Sendecodes das in der EmpfangsEinrichtung eingegangene Empfangssignal decodiert (8), sodass aus einem Empfangssignal eine Vielzahl von Subsignale erzeugt wird, deren Vielzahl der Anzahl der Sender entspricht.

4. Vorrichtung nach einem der Ansprüche 1 bis 3, wobei eine hochfrequente Phasenmodulation des Dauerstrich-Sendesignals und gleichzeitigem Betrieb aller Sender vorgesehen und wobei eine binäre 180° Phasencodierung vorgesehen ist, welche durch einen Pseudo-Zufallszahlen-Generator erzeugt wird.

5. Verfahren zur Bestimmung einer Position eines Objektes, unter Verwendung einer Vorrichtung nach einem der Ansprüche 1 bis 4, mit folgenden Verfahrensschritten:
a. Senden und Empfangen von Signalen mit Hilfe von Antennenstruktur in L- oder T-förmiger Anordnung, welche hinter dem luftundurchlässigen Bereich des Kühlergrills eines Fahrzeuges montiert wird
b. Erzeugen einer Code-Folge für die Sender nach dem Pseudo-Zufallsprinzip mit Hilfe eines rückgekoppelten Schieberegisters.
c. Erzeugen von Subsignalen aus dem Empfangssignal mittels De-Codierungsverfahren
d. Zuordnen der einzelnen Subsignale zu den Einzelstrahlern eines durch die Antennenstruktur erzeugten virtuellen Arraysstruktur.
e. Verknüpfen der Subsignale nach der Methode der digitalen Strahlformung zu mehreren gebündelten Antennenstrahlen in der horizontalen und vertikalen Richtung
f. Darstellen der horizontalen und vertikalen Position des Objekts.

6. Verfahren nach Anspruch 5, wobei mittels sägezahnförmiger Frequenzmodulation (2) des Sendesignals eine binäre 0°/180°-Phasencodierung des Sendesignals von Frequenzrampe zu Frequenzrampe vorgesehen ist.

7. Verfahren nach Anspruch 5 oder 6, wobei das De-Codierungsverfahren durch die Decodierung (8) mit der individuell erzeugten Code-Folge der Sendeantennen erfolgt.

8. Verfahren nach Anspruch 5, wobei eine hochfrequente binäre Phasenmodulation eines Dauerstrich-Sendesignals vorgesehen ist.

9. Verfahren nach einem der Ansprüche 5 oder 8, das De-Codierungsverfahren durch Kreuzkorrelation mit der zeitverzögerten individuell erzeugten Code-Folge der Sendeantennen erfolgt.

## Claims

1. Apparatus for determining the position of an object in three-dimensional space by means of an antenna structure (5), wherein the antenna structure has an L-, U- or T-shaped structure and can be mounted in the region of the front radiator of a vehicle with radiator grille, wherein the antenna structure is a radar sensor and a housing and an antenna arrangement of the radar sensor are formed in such a way that they can be integrated into the structure of the radiator grille, wherein the antenna structure is provided behind the air-impermeable region of the radiator grille and a combined frequency and phase modulation of the transmission signals and simultaneous operation of all transmitters is enabled.

2. Apparatus according to Claim 1, wherein the antenna structure (5) comprises a plurality of radar transceiver devices, wherein each device has a plurality of receivers and a plurality of transmitters and forms a virtual antenna array for two-dimensional horizontal and vertical beam scanning, wherein the virtual antenna array comes to rest in the region of the ventilation openings of the radiator grille.

3. Apparatus according to either of Claims 1 to 2, wherein an evaluation unit is provided, which decodes (8) the incoming received signal in the receiving device with fixed transmission codes, so that a plurality of sub-signals is generated from a received signal, the plurality of which corresponds to the number of transmitters.

4. Apparatus according to any one of Claims 1 to 3, wherein a high-frequency phase modulation of the continuous-wave transmission signal and simultaneous operation of all transmitters is provided and wherein a binary 180° phase encoding is provided, which is generated by means of a pseudo-random number generator.

5. Method for determining a position of an object, in using an apparatus according to any one of Claims 1 to 4, having the following method steps:
a. transmitting and receiving signals by means of an antenna structure in an L- or T-shaped arrangement, which is mounted in the region of the front radiator of a vehicle
b. generating a code sequence for the transmitters in accordance with the pseudo-random principle by means of a feedback shift register
c. generating sub-signals from the received signal using decoding procedures
d. assigning the individual sub-signals to the individual emitters of a virtual array structure generated by the antenna structure.
e. associating the sub-signals according to the method of digital beam forming with a plurality of focussed antenna beams in the horizontal and vertical direction
f. displaying the horizontal and vertical position of the object

6. Method according to Claim 5, wherein by means of sawtooth-shaped frequency modulation (2) of the transmitted signal a binary 0°/180° phase encoding of the transmitted signal from frequency ramp to frequency ramp is provided.

7. Method according to Claim 5 or 6, wherein the decoding procedure is carried out by decoding (8) with the individually generated code sequence of the transmitting antennas.

8. Method according to Claim 5, wherein a high-frequency binary phase modulation of a continuous-wave transmission signal is provided.

9. Method according to either of Claims 5 or 8, wherein the de-coding procedure takes place by cross-correlation with the time-delayed, individually generated code sequence of the transmitting antennas.

## Revendications

1. Procédé de détermination de la position d'un objet dans un espace tridimensionnel au moyen d'une structure d'antennes (5), sachant que la structure d'antennes comporte une structure en forme de L, de U ou de T et peut être montée dans la zone du radiateur avant avec une calandre de radiateur d'un véhicule, sachant que la structure d'antennes est un capteur radar et un boîtier et un système d'antennes du capteur radar sont formés de telle manière qu'ils peuvent être intégrés dans la structure de la calandre de radiateur, sachant que la structure d'antennes est prévue derrière la zone hermétique de la calandre de radiateur et sachant qu'une modulation de fréquence/de phase combinée des signaux d'émission et le fonctionnement simultané de tous les émetteurs sont possibles.

2. Dispositif selon la revendication 1, sachant que la structure d'antennes (5) comporte plusieurs systèmes radars émetteurs-récepteurs, sachant que chaque système comporte une pluralité de récepteurs et une pluralité d'émetteurs et forme un ensemble d'antennes virtuel pour un balayage de faisceau bidimensionnel horizontal et vertical, sachant que l'ensemble d'antennes virtuel vient est posé dans la zone des ouvertures d'aération de la calandre de radiateur.

3. Dispositif selon l'une quelconque des revendications 1 à 2, sachant qu'une unité d'évaluation est prévue, laquelle décode (8) le signal de réception parvenu dans le système de réception avec un code d'émission défini de telle manière qu'une pluralité de sous-signaux est produite à partir d'un signal de réception dont la pluralité correspond au nombre d'émetteurs.

4. Dispositif selon l'une quelconque des revendications 1 à 3, sachant qu'une modulation de phase à haute fréquence du signal d'émission à onde continue et un fonctionnement simultané de tous les émetteurs sont prévus et sachant qu'un codage de phase binaire de 180° est prévu, lequel est produit par un générateur de nombres pseudo-aléatoires.

5. Procédé de détermination d'une position d'un objet en utilisant un dispositif selon l'une quelconque des revendications 1 à 4 avec les étapes de procédé suivantes :
a. émission et réception de signaux à l'aide de structure d'antennes dans un agencement en forme de L ou de T, laquelle est montée derrière la zone hermétique de la calandre de radiateur d'un véhicule,
b. production d'une suite de codes pour les émetteurs selon le principe pseudo-aléatoire à l'aide d'un registre à décalage rétrocouplé,
c. production de sous-signaux à partir du signal de réception au moyen du procédé de décodage,
d. attribution de sous-signaux individuels aux faisceaux individuels d'une structure d'ensemble virtuelle produite par la structure d'antennes,
e. combinaison des sous-signaux selon la méthode de la formation numérique de faisceaux en plusieurs faisceaux d'antenne associés dans la direction horizontale et verticale,
f. représentation de la position horizontale et vertical de l'objet.

6. Procédé selon la revendication 5, sachant qu'une codification de phase (2) binaire de 0°/180° du signal d'émission de la rampe de fréquence à la rampe de fréquence est prévue au moyen d'une modulation de fréquence (2) en forme de dents de scie du signal d'émission.

7. Procédé selon la revendication 5 ou 6, sachant que le procédé de décodage a lieu par le décodage (8) avec la suite de codes produite individuellement des antennes émettrices.

8. Procédé selon la revendication 5, sachant qu'une modulation de phase binaire à haute fréquence d'un signal d'émission à onde continue est prévue.

9. Procédé selon l'une quelconque des revendications 5 ou 8, le procédé de décodage ayant lieu par corrélation croisée avec la suite de codes temporisée produite individuellement des antennes émettrices.
